# EUROPÄISCHE PATENTSCHRIFT

(11) **EP 3 643 434 B1**
(45) Veröffentlichungstag und Bekanntmachung des Hinweises auf die Patenterteilung: **29.09.2021**
(21) Anmeldenummer: 19216946.4
(22) Anmeldetag: 15.08.2017
(51) Int. Cl.: B22F 3/105, B33Y 30/00, B33Y 40/00, B29C 64/20

(54) **AUSPACKSTATION**
UNPACKING STATION
STATION DE DÉBALLAGE

(30) Priorität: 14.11.2016 DE 102016121773
(43) Veröffentlichungstag der Anmeldung: 29.04.2020
(62) Teilanmeldung aus: 17186296.4
(73) Patentinhaber: CL Schutzrechtsverwaltungs GmbH, 96215 Lichtenfels (DE)
(72) Erfinder: Bechmann, Florian, 96215 Lichtenfels (DE); Zeulner, Fabian, 96215 Lichtenfels (DE); Stammberger, Jens, 96472 Rödental (DE); Hetzel, Ralf, 96231 Bad Staffelstein (DE)
(74) Vertreter: Hafner & Kohl PartmbB

(56) Entgegenhaltungen:
- EP-A1- 2 289 652
- DE-A1-102004 041 633
- DE-A1-102007 033 434
- DE-A1-102009 029 765
- US-A1- 2002 090 410
- US-A1- 2013 278 920

## Beschreibung

Die Erfindung betrifft eine Auspackstation für eine Anlage zur additiven Herstellung dreidimensionaler Objekte gemäß dem Oberbegriff des Patentanspruchs 1.

Eine derartige Auspackstation geht beispielsweise aus der US 2002/090410 A1 hervor.

Die additive Herstellung dreidimensionaler Objekte durch sukzessive schichtweise selektive Belichtung und damit einhergehende sukzessive schichtweise selektive Verfestigung von Baumaterialschichten aus einem vermittels (hoch)energetischer Energiestrahlung, insbesondere Laserstrahlung, verfestigbaren Baumaterial findet typischerweise in einem Bauraum bzw. in einer Baukammer eines Baumoduls statt. Die additiv hergestellten dreidimensionalen Objekte sind nach Beendigung des additiven Bauvorgangs von nicht verfestigtem pulverartigen bzw. -förmigen Baumaterial umgeben.

Zum Auspacken der additiv hergestellten dreidimensionalen Objekte aus dem diese umgebenden Baumaterial sind Auspackeinrichtungen bekannt. Entsprechende Auspackeinrichtungen können z. B. als Saugeinrichtungen ausgebildet sein, welche zum Absaugen des das oder die auszupackende(n) dreidimensionale(n) Objekt(e) umgebenden nicht verfestigten Baumaterials eingerichtet sind. Dabei ist es üblich, dass ein einen Bestandteil einer entsprechenden Saugeinrichtung bildendes Saugelement, z. B. in Form einer Sauglanze, manuell gehandhabt wird.

Dieses Vorgehen ist insbesondere im Hinblick auf Automatisierbarkeit, Effizienz und Sicherheit des Auspackvorgangs verbesserungswürdig.

Der Erfindung liegt die Aufgabe zugrunde, eine, insbesondere im Hinblick auf Automatisierbarkeit, Effizienz und Sicherheit des Auspackvorgangs, verbesserte Auspackstation zum Auspacken eines additiv hergestellten dreidimensionalen Objekts aus dem dieses nach Beendigung eines additiven Bauvorgangs umgebenden nicht verfestigten Baumaterial anzugeben.

Die Aufgabe wird durch eine Auspackstation gemäß Anspruch 1 gelöst. Die hierzu abhängigen Ansprüche betreffen mögliche Ausführungsformen der Auspackstation.

Die hierin beschriebene Auspackstation dient zum Auspacken eines additiv hergestellten dreidimensionalen Objekts ("Objekt") aus dem dieses nach Beendigung eines additiven Bauvorgangs umgebenden (, im Rahmen der additiven Herstellung des Objekts erfolgenden sukzessiven schichtweisen selektiven Belichtung und damit einhergehenden sukzessiven schichtweisen selektiven Verfestigung von Baumaterialschichten, verfestigbaren Baumaterial) nicht verfestigten pulverartigen bzw. -förmigen Baumaterial. Bei dem Baumaterial handelt es sich beispielsweise um ein Metallpulver; gleichwohl sind als Baumaterial auch Keramik- oder Kunststoffpulver denkbar. Unter Auspacken ist im Allgemeinen ein Entfernen von dem das jeweilige Objekt umgebenden Baumaterial zu verstehen; das jeweilige Objekt wird von dem dieses umgebenden Baumaterial "befreit".

Die hierin beschriebene Auspackeinrichtung ist als ein wenigstens drei (unterschiedliche) Roboterachsen aufweisender Roboter ("Auspackroboter"), insbesondere als ein wenigstens drei (unterschiedliche) Roboterachsen aufweisender Industrieroboter, ausgebildet bzw. umfasst wenigstens einen, d. h. gegebenenfalls auch mehrere, solche(n) Roboter.

Ein entsprechender Roboter weist typischerweise wenigstens einen Roboterarm auf, welcher mehrere über Gelenkelemente gelenkig miteinander verbundene, typischerweise seriell nacheinander geschaltet angeordnete Roboterglieder umfasst. Die Roboterachsen sind typischerweise jeweiligen über Gelenkelemente miteinander verbundenen Robotergliedern zugeordnet. Der Roboter kann z. B. als ein Gelenk- oder Knickarmroboter mit mehreren seriell nacheinander geschaltet angeordneten, über jeweilige Gelenkelemente gelenkig miteinander verbundenen Robotergliedern ausgeführt sein. Eines, mehrere oder alle Gelenkelemente des Roboters können als Drehgelenke ausgebildet sein. Grundsätzlich kann der Roboter jedwede Art von wenigstens drei Roboterachsen aufweisender Roboter bzw. Industrieroboter sein.

An einer Roboterachse ist wenigstens ein Auspackwerkzeug, welches zum Auspacken eines additiv hergestellten dreidimensionalen Objekts aus dem dieses nach Beendigung eines additiven Bauvorgangs umgebenden nicht verfestigten Baumaterial eingerichtet ist, angeordnet oder ausgebildet. Bei der Roboterachse, an welcher das wenigstens eine Auspackwerkzeug angeordnet oder ausgebildet ist, handelt es sich typischerweise um eine Roboterachse, welche einem ein freies Ende des Roboterarms bildenden Roboterglied zugeordnet ist.

Durch die Ausbildung der Auspackeinrichtung als Roboter bzw. den Umstand, dass die Auspackeinrichtung wenigstens einen entsprechenden Roboter umfasst, ist ein automatisierbares bzw. automatisiertes Auspacken jeweiliger Objekte möglich. Es ist nicht notwendig, dass ein einen Bestandteil einer Saugeinrichtung bildendes Saugelement manuell gehandhabt wird. Auspackvorgänge sind sowohl im Hinblick auf Automatisierbarkeit, Effizienz und Sicherheit verbessert.

Mithin liegt eine insbesondere im Hinblick auf Automatisierbarkeit, Effizienz und Sicherheit des Auspackvorgangs, verbesserte Auspackeinrichtung zum Auspacken eines additiv hergestellten dreidimensionalen Objekts aus dem dieses nach Beendigung eines additiven Bauvorgangs umgebenden nicht verfestigten Baumaterial vor.

Der Roboter kann mehr als drei Roboterachsen, insbesondere fünf, sechs oder mehr, Roboterachsen aufweisen. Je mehr Roboterachsen der Roboter aufweist, desto größer ist seine Bewegungsfreiheit im Rahmen des Auspackens jeweiliger Objekte. Es wurde erwähnt, dass der Roboter als Gelenk- bzw. Knickarmroboter ausgeführt sein kann. Eine zweckmäßige Ausführungsform sieht eine Ausbildung des Roboters als fünf- oder sechsachsiger Gelenk- bzw. Knickarmroboter vor.

Unabhängig von deren Anzahl und somit auch von der konkreten Ausführung des Roboters sind jeweilige Roboterachsen typischerweise unabhängig voneinander ansteuerbar. Die Roboterachsen sind entsprechend auch unabhängig voneinander bewegbar. Typischerweise ist jede Roboterachse in wenigstens einem Bewegungsfreiheitsgrad bewegbar.

Das Auspackwerkzeug kann ein einen Teil einer Saug- und/oder Gebläseeinrichtung bildendes Saug- und/oder Gebläsewerkzeug, insbesondere eine Saugdüse oder -lanze oder eine Gebläsedüse oder -lanze, sein bzw. ein solches Saug- und/oder Gebläsewerkzeug umfassen. Ein jeweiliges Saug- und/oder Gebläsewerkzeug ist über, z. B. an oder in dem Roboter angeordnete oder ausgebildete, von einer Saug- bzw. Gebläseströmung durchströmbare Leitungselemente mit einem eine Saug- bzw. Gebläseströmung erzeugenden Teil der Saug- und/oder Gebläseeinrichtung verbunden. Vermittels entsprechender Saug- und/oder Gebläsewerkzeuge erfolgt das Auspacken jeweiliger Objekte über ein Absaugen und/oder Abblasen von Baumaterial. Es ist denkbar, dass ein kombinierter Auspackvorgang ein Absaugen von Baumaterial vermittels eines Saugwerkzeugs und ein Abblasen von verbliebenem Baumaterial vermittels eines Gebläsewerkzeugs vorsieht. Der Saug- und der Gebläsevorgang können gleichzeitig erfolgen, wobei es möglich ist, dass das Saugwerkzeug eine von dem Gebläsewerkzeug erzeugte, über das Objekt geführte, Baumaterial enthaltende Gebläseströmung vermittels einer von dem Saugwerkzeug erzeugten Saugströmung aufsaugt, oder zeitlich versetzt erfolgen. In allen Fällen lässt sich ein inertes Auspacken jeweiliger Objekte realisieren; mithin kann eine verwendete Saug- und/oder Gebläseströmung inert sein. Neben Auspackwerkzeugen in Form entsprechender Saug- und/oder Gebläsewerkzeuge sind selbstverständlich auch andere Auspackwerkzeuge, d. h. z. B. Auspackwerkzeuge in Form von Bürsten, Pinseln, Schaufeln oder dergleichen, denkbar.

Ein jeweiliges Auspackwerkzeug kann lösbar an der jeweiligen Roboterachse angeordnet bzw. befestigt sein. Zur Realisierung einer lösbaren Befestigung eines jeweiligen Auspackwerkzeugs können seitens des Roboters und/oder seitens des Auspackwerkzeugs geeignete, insbesondere mechanische, Befestigungsschnittstellen angeordnet oder ausgebildet sein, welche eine lösbare Befestigung eines Auspackwerkzeugs an der Roboterachse ermöglichen. Eine lösbare Befestigung eines Auspackwerkzeugs an der jeweiligen Roboterachse kann jedoch auch dadurch realisiert sein, dass die Roboterachse ein Greifelement umfasst, welches zum Greifen eines Auspackwerkzeugs eingerichtet ist.

Durch die lösbare Anordnung bzw. Befestigung eines jeweiligen Auspackwerkzeugs an der jeweiligen Roboterachse ist es möglich, dass ein Auspackwerkzeug bedarfsweise auswechselbar an der jeweiligen Roboterachse angeordnet bzw. befestigt ist. Ein Auswechselvorgang eines jeweiligen Auspackwerkzeugs kann ebenso automatisiert erfolgen. Der Roboter kann, z. B. in einem hierfür eigens vorgesehenen Werkzeugwechselmodus bzw. -programm, eingerichtet sein, einen Wechsel eines Auspackwerkzeugs vorzunehmen. Hierbei kann der Roboter z. B. in eine Auswechselposition bewegbar sein, in welcher der Roboter selbstständig Auspackwerkzeugwechsel vornimmt. In der Auswechselposition kann der Roboter, d. h. wenigstens die Roboterachse, an welcher das Auspackwerkzeug lösbar zu befestigen bzw. befestigt ist, Auspackwerkzeuge in einen der Auspackeinrichtung zugeordneten Werkzeugspeicher geben bzw. aus einem der Auspackeinrichtung zugeordneten Werkzeugspeicher entnehmen.

Die Auspackeinrichtung umfasst typischerweise eine hard- und/oder softwaremäßig implementierte Steuereinrichtung, welche zur Erzeugung von die Bewegungen der Roboterachsen im Betrieb des Roboters steuernden Steuerungsinformationen eingerichtet ist. Die Steuereinrichtung kann eingerichtet sein, entsprechende Steuerungsinformationen auf Grundlage von die geometrisch-konstruktive Gestalt eines jeweils auszupackenden Objekts beschreibenden Daten, insbesondere auf Grundlage von die geometrisch-konstruktive Gestalt eines jeweils auszupackenden Objekts beschreibenden Baudaten, zu erzeugen. Die Bewegungen der Roboterachsen können sonach auf die geometrisch-konstruktive Gestalt bzw. die geometrisch-konstruktiven Merkmale des auszupackenden Objekts, d. h. insbesondere die Außen-und/oder Innenkontur, etwaige Hinterschneidungen, etc., abgestimmt sein. Auspackvorgänge können individuell unter Berücksichtigung der geometrisch-konstruktiven Gestalt eines jeweils auszupackenden Objekts gesteuert werden. Derart kann der Rechenaufwand zur Erzeugung von entsprechenden die Bewegungen der Roboterachsen bzw. der Roboterglieder steuernden Steuerungsinformationen (erheblich) reduziert und insbesondere die Effizienz der mit der Auspackeinrichtung durchführbaren bzw. durchgeführten Auspackvorgänge (erheblich) gesteigert werden.

Die Auspackstation umfasst eine, insbesondere quaderförmige, Auspackkammer, welche einen Teil einer der Auspackstation zugehörigen Gehäusekonstruktion bilden kann. Die Auspackstation ist typischerweise inertisierbar bzw. inertisiert. Der oder die der Auspackeinrichtung zugehörige(n) Roboter kann bzw. können an oder in einer die Auspackkammer (mit)begrenzenden Boden-, Seiten- oder Deckenwandung der Auspackkammer angeordnet oder ausgebildet sein. Grundsätzlich sind sowohl stehende als auch (seitlich) hängende Anordnungen von Robotern denkbar.

Die Auspackeinrichtung bzw. der oder die der Auspackeinrichtung zugehörige(n) Roboter ist in wenigstens einem Bewegungsfreiheitsgrad bewegbar gelagert in der Auspackkammer angeordnet oder ausgebildet. Sofern der oder die Roboter nicht über eigene Bewegungsantriebe verfügen, können auspackkammerseitig geeignete Bewegungseinrichtungen vorhanden sein, welche eine, insbesondere entlang einer bestimmten Bewegungsbahn, geführte Bewegung eines Roboters ermöglichen. Entsprechende Bewegungseinrichtungen können z. B. eine geführte Bewegung eines Roboters entlang eines auszupackenden Objekts innerhalb eines das auszupackende Objekt enthaltenden, in die Auspackstation bewegten Baumoduls ermöglichen. Der Roboter kann dabei in (vor)definierte Auspackpositionen relativ zu dem auszupackenden Objekt bzw. relativ zu dem Baumodul bewegt werden. Die Auspackpositionen können wiederum auf Grundlage der geometrisch-konstruktiven Gestalt des auszupackenden Objekts gewählt sein. Derart kann der Rechenaufwand zur rechnerbasierten Auswahl zweckmäßiger Auspackpositionen des Roboters reduziert werden.

Neben der Auspackstation betrifft die Erfindung auch eine Anlage zur additiven Herstellung dreidimensionaler Objekte. Die Anlage zeichnet sich dadurch aus dass sie wenigstens eine wie beschriebene Auspackstation umfasst. Mithin gelten sämtliche Ausführungen im Zusammenhang mit der Auspackstation analog für die Anlage.

Neben der Auspackstation umfasst die Anlage typischerweise wenigstens eine Vorrichtung zur additiven Herstellung dreidimensionaler Objekte, d. h. beispielsweise technischer Bauteile bzw. technischer Bauteilgruppen, durch sukzessives schichtweises selektives Belichten und damit einhergehendes Verfestigen von Baumaterialschichten aus einem vermittels eines Laserstrahls verfestigbaren Baumaterial. Die selektive Verfestigung jeweiliger selektiv zu verfestigender Baumaterialschichten erfolgt auf Grundlage objektbezogener Baudaten. Entsprechende Baudaten beschreiben die geometrisch-konstruktive Gestalt des jeweils additiv herzustellenden Objekts und können beispielsweise "geslicte" CAD-Daten eines jeweiligen additiv herzustellenden Objekts beinhalten. Die Vorrichtung kann als SLM-Vorrichtung, d. h. als Vorrichtung zur Durchführung selektiver Laserschmelzverfahren (SLM-Verfahren), oder als SLS-Vorrichtung, d. h. als Vorrichtung zur Durchführung selektiver Lasersinterverfahren (SLS-Verfahren), ausgebildet sein.

Die Erfindung ist anhand von Ausführungsbeispielen in den Zeichnungsfiguren näher erläutert. Dabei zeigen:
- Fig. 1: eine Prinzipdarstellung einer Auspackstation gemäß einem Ausführungsbeispiel; und
- Fig. 2: eine Prinzipdarstellung eines Roboters gemäß einem Ausführungsbeispiel.

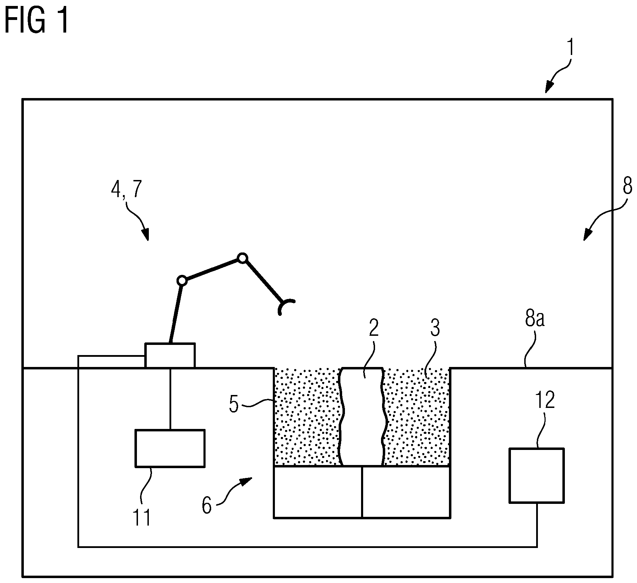

Fig. 1 zeigt eine Prinzipdarstellung einer Auspackstation 1 gemäß einem Ausführungsbeispiel.

Die Auspackstation 1 ist einer Vorrichtung (nicht gezeigt) zur additiven Herstellung dreidimensionaler Objekte 2, d. h. insbesondere technischer Bauteile bzw. technischer Bauteilgruppen, zugeordnet. Die Vorrichtung ist zur additiven Herstellung dreidimensionaler Objekte 2 durch sukzessives schichtweises selektives Belichten und damit einhergehendes Verfestigen von Baumaterialschichten aus einem verfestigbaren Baumaterial 3, d. h. z. B. eines Metallpulvers, vermittels eines Laserstrahls eingerichtet. Die selektive Verfestigung jeweiliger selektiv zu verfestigender Baumaterialschichten erfolgt auf Grundlage von objektbezogenen Baudaten. Entsprechende Baudaten beschreiben die geometrische bzw. geometrisch-konstruktive Gestalt des jeweils additiv herzustellenden Objekts 2.

Die Vorrichtung wie auch die dieser zugeordnete Auspackstation 1 bilden Bestandteile einer übergeordneten Anlage (nicht gezeigt) zur additiven Herstellung dreidimensionaler Objekte 2.

Die Auspackstation 1 umfasst eine Auspackeinrichtung 4. Die Auspackeinrichtung 4 ist in einer inertisierbaren bzw. inertisierten Auspackkammer 8 der Auspackstation 1 angeordnet. Die Auspackkammer 8 kann einen Teil einer der Auspackstation 1 zugehörigen Gehäusekonstruktion (nicht näher bezeichnet) bilden.

Die Auspackeinrichtung 4 ist zum Auspacken eines additiv hergestellten dreidimensionalen Objekts 2 aus dem dieses nach Beendigung eines additiven Bauvorgangs umgebenden nicht verfestigten pulverartigen bzw. -förmigen Baumaterial 3 eingerichtet. In dem in Fig. 1 gezeigten Ausführungsbeispiel ist das Objekt 2 nebst dem dieses umgebenden Baumaterial 3 in einem Bauraum 5 bzw. in einer Baukammer eines in die Auspackstation 1 bewegten Baumoduls 6 angeordnet.

Die Auspackeinrichtung 4 ist als ein wenigstens drei (unterschiedliche) Roboterachsen A1 - A6 aufweisender Roboter 7 ausgebildet. Der Roboter 7 ist z. B. auf einer die Auspackkammer 8 bodenseitig begrenzenden Bodenwandung 8a der Auspackkammer 8 angeordnet. Denkbar ist es jedoch auch, dass der Roboter 7 an einer die Auspackkammer 8 (mit)begrenzenden Seiten- oder Deckenwandung der Auspackkammer 8 angeordnet oder ausgebildet ist. Grundsätzlich sind sowohl stehende als auch (seitlich) hängende Anordnungen von Robotern 7 denkbar.

Der Roboter 7 ist in wenigstens einem Bewegungsfreiheitsgrad bewegbar gelagert in der Auspackkammer 8 angeordnet sein. Sofern der Roboter 7 nicht über eigene Bewegungsantriebe verfügt, können auspackkammerseitig geeignete Bewegungseinrichtungen (nicht gezeigt) vorhanden sein, welche eine, insbesondere entlang einer bestimmten Bewegungsbahn, geführte Bewegung des Roboters 7 ermöglichen. Entsprechende Bewegungseinrichtungen können z. B. eine geführte Bewegung des Roboters 7 entlang des auszupackenden Objekts 2 bzw. innerhalb des das auszupackende Objekt 2 enthaltenden, in die Auspackstation 1 bewegten Baumoduls 6 ermöglichen. Der Roboter 7 kann dabei in (vor)definierte Auspackpositionen bewegt werden, welche auf Grundlage der geometrisch-konstruktiven Gestalt des auszupackenden Objekts 2 gewählt sein können.

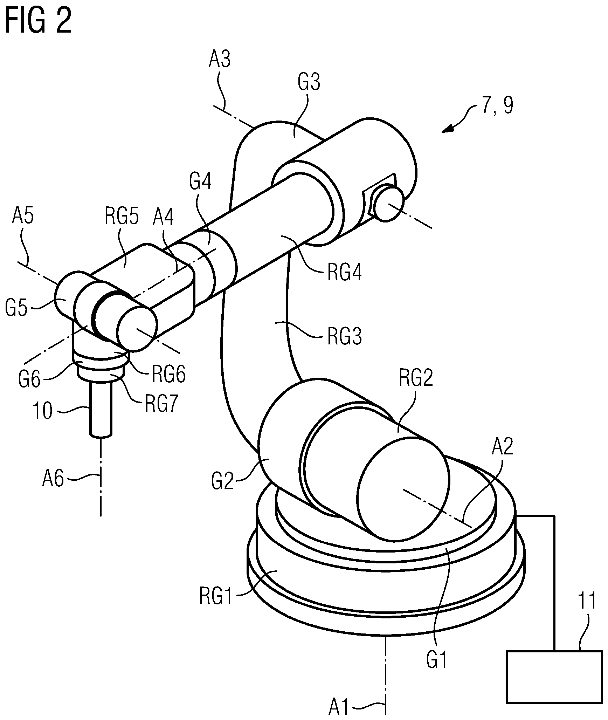

Fig. 2 zeigt eine Prinzipdarstellung eines Roboters 7 gemäß einem Ausführungsbeispiel, welcher Roboter 7 in der in Fig. 1 gezeigten Auspackstation 1 verwendet werden kann.

Der Roboter 7 ist als Gelenk- oder Knickarmroboter ausgeführt und umfasst einen Roboterarm 9. Der Roboterarm 9 umfasst mehrere seriell nacheinander geschaltet angeordnete, über Gelenkelemente G1 - G6 gelenkig miteinander verbundene Roboterglieder RG 1 - RG7. Bei den Gelenkelementen G1 - G6 handelt es sich um Drehgelenke. Die Gelenkelemente G1 - G6 stellen eine drehbare Verbindung jeweils (unmittelbar) benachbart angeordneter Roboterglieder RG 1 - RG7 her. Ersichtlich sind die Roboterachsen A1 - A1 den Gelenkelementen G1 - G6 bzw. den über die Gelenkelemente G1 - G6 miteinander verbundenen Robotergliedern RG1 - RG7 zugeordnet.

Die jeweiligen Roboterachsen A1 - A6 bzw. die Gelenkelemente G1 - G6 bzw. die Roboterglieder RG1 - RG7 sind unabhängig voneinander ansteuerbar und entsprechend unabhängig voneinander bewegbar. Die Steuerung der Bewegungen der Roboterglieder RG1 - RG7, d. h. die Steuerung des Betriebs des Roboters 7, erfolgt über eine hard- und/oder softwaremäßig implementierte Steuereinrichtung 11.

Bei den Robotergliedern RG1 - RG7 handelt es sich in dem in Fig. 2 gezeigten Ausführungsbeispiel um eine Basis (Roboterglied RG1), ein dieser nachgeschaltetes, um die Roboterachse A1 drehbar gelagertes Karussell (Roboterglied RG2), eine diesem nachgeschaltete, um die Roboterachse A2 drehbar gelagerte Schwinge (Roboterglied RG3), einen dieser nachgeschaltete, um die Roboterachse A3 drehbar gelagerten Ausleger (Roboterglied RG4), eine diesem nachgeschaltete, um die Roboterachse A4 drehbar gelagerte mehrachsige Roboterhand (Roboterglied RG5), eine dieser nachgeschaltete, um die Roboterachse A5 drehbar gelagerte Befestigungseinrichtung (Roboterglied RG6) sowie eine dieser nachgeschaltete, um die Roboterachse A6 drehbar gelagerte Werkzeugaufnahmeeinrichtung (Roboterglied RG7). Anstelle der Werkzeugaufnahmeeinrichtung könnte auch ein Roboterwerkzeug angeordnet sein.

An dem (letzten) Gelenk G6 bzw. dem das freie Ende des Roboterarms 9 bildenden (letzten) Roboterglied RG7 ist ein Auspackwerkzeug 10, welches zum Auspacken eines additiv hergestellten dreidimensionalen Objekts 2 aus dem dieses nach Beendigung eines additiven Bauvorgangs umgebenden nicht verfestigten Baumaterial 3 eingerichtet ist, angeordnet.

Bei dem Auspackwerkzeug 10 handelt es sich in den in den Fig. gezeigten Ausführungsbeispielen um ein einen Teil einer Saug- und/oder Gebläseeinrichtung (nicht gezeigt) bildendes Saug- und/oder Gebläsewerkzeug, insbesondere eine Saugdüse bzw. -lanze oder eine Gebläsedüse bzw. -lanze. Das Saug- und/oder Gebläsewerkzeug ist über, z. B. an oder in dem Roboter 7 angeordnete oder ausgebildete, von einer Saug- bzw. Gebläseströmung durchströmbare Leitungselemente (nicht gezeigt) mit einem eine Saug- bzw. Gebläseströmung erzeugenden Teil der Saug- und/oder Gebläseeinrichtung verbunden. Das Auspacken jeweiliger Objekte 2 erfolgt sonach über ein Absaugen und/oder Abblasen des Baumaterials 3 von dem Objekt 2. Dabei ist ein inertes Auspacken des Objekts 2 möglich, da eine inerte Saug- und/oder Gebläseströmung, d. h. z. B. eine Argon- oder Stickstoffströmung, verwendet werden kann.

Das im Rahmen des Auspackens des Objekts 2 von diesem entfernte Baumaterial 3 kann in eine Aufbereitungseinrichtung 12 (vgl. Fig. 1) geführt werden, welche zur Aufbereitung des Baumaterials 3 eingerichtet ist, sodass dieses gegebenenfalls in einem additiven Bauvorgang wiederverwendet werden kann.

Das Auspackwerkzeug 10 kann lösbar an der Roboterachse A6 bzw. dem Roboterglied RG7 angeordnet bzw. befestigt sein. Zur Realisierung einer lösbaren Befestigung des Auspackwerkzeugs 10 können seitens der Roboters 7 und/oder seitens des Auspackwerkzeugs 10 geeignete, insbesondere mechanische, Befestigungsschnittstellen (nicht gezeigt) angeordnet oder ausgebildet sein, welche eine lösbare Befestigung des Auspackwerkzeugs 10 an der Roboterachse A6 bzw. dem Roboterglied RG7 ermöglichen. Eine lösbare Befestigung des Auspackwerkzeugs 10 an der Roboterachse A6 bzw. dem Roboterglied RG7 kann auch dadurch realisiert sein, dass die Roboterachse A6 bzw. das Roboterglied RG7 ein Greifelement umfasst, welches zum Greifen des Auspackwerkzeugs 10 eingerichtet ist.

Durch die lösbare Anordnung bzw. Befestigung eines Auspackwerkzeugs 10 an der Roboterachse A6 bzw. dem Roboterglied RG7 ist es möglich, dass ein Auspackwerkzeug 10 bedarfsweise auswechselbar an der Roboterachse A6 bzw. dem Roboterglied RG7 angeordnet bzw. befestigt ist. Der Roboter 7 kann, z. B. in einem hierfür eigens vorgesehenen Werkzeugwechselmodus bzw. -programm, eingerichtet sein, einen automatisierten Wechsel eines Auspackwerkzeugs 10 vorzunehmen.

Hierbei kann der Roboter 7, d. h. insbesondere die Roboterachse A6 bzw. das Roboterglied RG7, z. B. in eine Auswechselposition bewegbar sein, in welcher der Roboter 7 selbstständig einen Auspackwerkzeugwechsel vornimmt. In der Auswechselposition kann der Roboter 7, d. h. wenigstens die Roboterachse A6 bzw. das Roboterglied RG7, an welcher das Auspackwerkzeug 10 lösbar zu befestigen bzw. befestigt ist, Auspackwerkzeuge 10 in einen der Auspackeinrichtung 4 zugeordneten Werkzeugspeicher (nicht gezeigt) geben bzw. aus einem der Auspackeinrichtung 4 zugeordneten Werkzeugspeicher entnehmen.

Wie erwähnt, umfasst die Auspackeinrichtung 4 eine Steuereinrichtung 11, welche zur Erzeugung von die Bewegungen der Roboterachsen A1 - A6 bzw. der Roboterglieder RG1 - RG7 im Betrieb des Roboters 7 steuernden Steuerungsinformationen eingerichtet ist. Die Steuereinrichtung 11 kann eingerichtet sein, entsprechende Steuerungsinformationen auf Grundlage von die geometrisch-konstruktive Gestalt des auszupackenden Objekts 2 beschreibenden Daten, insbesondere auf Grundlage von die geometrisch-konstruktive Gestalt des auszupackenden Objekts 2 beschreibenden Baudaten, zu erzeugen. Auspackvorgänge können derart individuell unter Berücksichtigung der geometrisch-konstruktiven Gestalt des jeweils auszupackenden Objekts 2 gesteuert werden. Der Rechenaufwand zur Erzeugung von entsprechenden die Bewegungen der Roboterachsen A1 - A6 bzw. der Roboterglieder RG1 - RG7 steuernden Steuerungsinformationen kann derart reduziert werden.

## Patentansprüche

1. Auspackstation (1) für eine Anlage zur additiven Herstellung dreidimensionaler Objekte (2), umfassend wenigstens eine Auspackeinrichtung (4) zum Auspacken eines additiv hergestellten dreidimensionalen Objekts (2) aus dem dieses nach Beendigung eines additiven Bauvorgangs umgebenden nicht verfestigten Baumaterial (3), wobei die Auspackstation (1) eine Auspackkammer (8) aufweist, **dadurch gekennzeichnet, dass** die Auspackeinrichtung (4) als ein wenigstens drei Roboterachsen (A1 - A6) aufweisender Roboter (7), insbesondere Industrieroboter, ausgebildet ist, wobei an einer Roboterachse (A6) wenigstens ein Auspackwerkzeug (10), welches zum Auspacken eines additiv hergestellten dreidimensionalen Objekts (2) aus dem dieses nach Beendigung eines additiven Bauvorgangs umgebenden nicht verfestigten Baumaterial (3) eingerichtet ist, angeordnet oder ausgebildet ist, oder die Auspackeinrichtung (4) wenigstens einen solchen Roboter (7) umfasst, wobei der Roboter (7) in wenigstens einem Bewegungsfreiheitsgrad bewegbar gelagert in der Auspackkammer (8) angeordnet oder ausgebildet ist.

2. Auspackstation nach Anspruch 1, **dadurch gekennzeichnet, dass** das Auspacken des additiv hergestellten Objekts (2) aus dem dieses umgebenden nicht verfestigten Baumaterial (3) ein Entfernen des das Objekt (2) umgebenden Baumaterials (3) umfasst.

3. Auspackstation nach Anspruch 1 oder 2, **dadurch gekennzeichnet, dass** die Auspackeinrichtung (4) an oder in einer die Auspackkammer (8) begrenzenden Boden-, Seiten- oder Deckenwandung angeordnet oder ausgebildet ist.

4. Auspackstation nach einem der vorhergehenden Ansprüche, **dadurch gekennzeichnet, dass** wenigstens ein Teil der Roboterachsen (A1 - A6), insbesondere sämtliche Roboterachsen (A1 - A6), des Roboters (7) unabhängig voneinander ansteuerbar sind.

5. Auspackstation nach einem der vorhergehenden Ansprüche, **dadurch gekennzeichnet, dass** das Auspackwerkzeug (10) ein einen Teil einer Saug-und/oder Gebläseeinrichtung bildenden Saug- und/oder Gebläsewerkzeug, insbesondere eine Sauglanze oder eine Gebläselanze, ist.

6. Auspackstation nach Anspruch 5, **gekennzeichnet durch** von einer Saug-oder Gebläseströmung durchströmbare, an oder in dem Roboter (7) angeordnete oder ausgebildete Leitungselemente, wobei das Saug- und/oder Gebläsewerkzeug über die Leitungselemente mit einem eine Saug- bzw. Gebläseströmung erzeugenden Teil der Saug- und/oder Gebläseeinrichtung verbunden ist.

7. Auspackstation nach einem der vorhergehenden Ansprüche, **dadurch gekennzeichnet, dass** das Auspackwerkzeug (10) zur Durchführung eines kombinierten Auspackvorgangs, welcher einen Absaugprozess von Baumaterial vermittels eines Saugwerkzeugs und einen Abblasprozess von verbliebenem Baumaterial vermittels eines Gebläsewerkzeugs vorsieht, eingerichtet ist.

8. Auspackstation nach Anspruch 7, **dadurch gekennzeichnet, dass** der Absaugprozess und der Abblasprozess gleichzeitig durchführbar oder durchgeführt sind.

9. Auspackstation nach Anspruch 7, **dadurch gekennzeichnet, dass** der Absaugprozess und der Abblasprozess simultan zeitlich versetzt durchführbar oder durchgeführt sind.

10. Auspackstation nach einem der vorhergehenden Ansprüche, **dadurch gekennzeichnet, dass** das Auspackwerkzeug (10) lösbar an dem Roboter (7), insbesondere der jeweiligen Roboterachse (A1 - A6), angeordnet ist, sodass es bedarfsweise auswechselbar an der jeweiligen Roboterachse (A1 - A6) angeordnet ist.

11. Auspackstation nach einem der vorhergehenden Ansprüche, **dadurch gekennzeichnet, dass** die Auspackeinrichtung (4) mehrere Roboter (7) umfasst.

12. Auspackstation nach einem der vorhergehenden Ansprüche, **dadurch gekennzeichnet, dass** der Roboter (7) wenigstens ein Greifelement umfasst, wobei eine lösbare Befestigung des Auspackwerkzeugs (10) an der jeweiligen Roboterachse (A1 - A6) bzw. dem Roboterglied (RG7) dadurch realisiert wird, dass die jeweilige Roboterachse (A1 - A6) das Greifelement umfasst, welches zum Greifen des Auspackwerkzeugs (10) eingerichtet ist.

13. Auspackstation nach einem der vorhergehenden Ansprüche, **gekennzeichnet durch** eine Steuereinrichtung (11), welche zur Erzeugung von die Bewegungen der Roboterachsen (A1 - A6) im Betrieb des Roboters (7) steuernden Steuerungsinformationen eingerichtet ist, wobei die Steuereinrichtung (11) eingerichtet ist, die Steuerungsinformationen auf Grundlage von die geometrisch-konstruktive Gestalt eines auszupackenden additiv hergestellten dreidimensionalen Objekts (2) beschreibenden Daten, insbesondere auf Grundlage von die geometrisch-konstruktive Gestalt eines auszupackenden additiv hergestellten dreidimensionalen Objekts (2) beschreibenden Baudaten, zu erzeugen.

14. Auspackstation (1) nach einem der vorhergehenden Ansprüche, **gekennzeichnet durch** eine, insbesondere quaderförmige, Auspackkammer (8), wobei die Auspackeinrichtung (4) an oder in einer die Auspackkammer (8) begrenzenden Boden-, Seiten- oder Deckenwandung angeordnet oder ausgebildet ist.

15. Anlage zur additiven Herstellung dreidimensionaler Objekte (2), **dadurch gekennzeichnet, dass** sie wenigstens eine Auspackstation (1) nach einem der vorhergehenden Ansprüche umfasst.

## Claims

1. An unpacking station (1) for a system for additive manufacturing of three-dimensional objects (2), the unpacking station (1) comprising:
a construction module (6) configured to contain an additively manufactured three-dimensional object (2) and unsolidified construction material (3) surrounding the object (2);
an unpacking device (4) for unpacking the object (2) from the unsolidified construction material (3) after completion of an additive construction process, wherein the unpacking device (4) comprises a robot (7) having at least three robot axes (A1-A6);
at least one unpacking tool (10) arranged or formed on a robot axis (A6), the unpacking tool (10) provided for unpacking the object (2) from the unsolidified construction material (3) surrounding the object (2) after completion of the additive construction process; and
a movement device configured to provide movement of the robot (7) relative to the object (2) or movement of the robot (7) relative to the construction module (6).

2. The unpacking station (1) according to claim 1, wherein unpacking the object (2) from the unsolidified construction material (3) comprises removal of the construction material (3) surrounding the object (2).

3. The unpacking station (1) according to claim 1 or claim 2, wherein the unpacking station (1) comprises an unpacking chamber (8), and wherein the unpacking device (4) is arranged or formed on or in a bottom, side, or top wall limiting the unpacking chamber (8).

4. The unpacking station (1) according to any one of the preceding claims, wherein at least one of the robot axes (A1-A6), particularly all robot axes (A1-A6), of the robot (7) can be controlled independently.

5. The unpacking station (1) according to any one of the preceding claims, wherein the unpacking tool (10) is a suction and/or blower tool forming part of a suction and/or blower device, particularly a suction lance or blower lance.

6. The unpacking station (1) according to any one of the preceding claims, further comprising pipe elements arranged or formed on or in the robot through which suction and/or blower flow may flow, wherein the suction and/or the blower tool is connected via the pipe elements with part of a suction and/or blower device which generates a suction and/or blowing stream.

7. The unpacking station (1) according to any one of the preceding claims, wherein the unpacking tool (10) is configured to perform a combined unpacking process comprising:
a suction process using a suction tool; and
a blowing process using a blower tool.

8. The unpacking station (1) according to claim 7, wherein suction process and the blowing process are performed simultaneously.

9. The unpacking station (1) according to claim 7, wherein suction process and the
blowing process are performed at staggered intervals.

10. The unpacking station (1) according to any one of the preceding claims, wherein the unpacking tool (10) is arranged exchangeably on the robot (7), particularly the respective robot axis (A1-A6), so that it is arranged exchangeably as necessary on the respective robot axis (A1-A6).

11. The unpacking station (1) according to any one of the preceding claims, wherein the unpacking device (4) comprises a plurality of robots (7).

12. The unpacking station (1) according to any one of the preceding claims, wherein the robot (7) comprises a gripping element, wherein a detachable attachment of the unpacking toll (10) at the respective robot axis (A1-A6) is realized in that the respective robot axis (A1-A6) comprises the gripping element, which is configured to grip the unpacking tool (10).

13. The unpacking station (1) according to any one of the preceding claims, further comprising a control device (11) provided for generating control information controlling the movements of the robot axes (A1-A6) during operation of the robot (7), wherein the control device (11) is provided for generating the control information on the basis of data describing the geometric structural design of an additively manufactured three-dimensional object (2) to be unpacked, particularly the control information generated at least in part on the basis of construction data describing the geometric structural design of an additively manufactured three-dimensional object (2) to be unpacked.

14. An unpacking station according to any one of the preceding claims, further comprising an, particularly cubical, unpacking chamber (8), wherein the unpacking device (4) is arranged or formed on or in a bottom, side, or top wall limiting the unpacking chamber (8).

15. A system for additive manufacturing of three-dimensional objects (2), comprising at least one unpacking station (1) according to any one of the preceding claims.

## Revendications

1. Station de déballage (1) pour une installation de fabrication additive d'objets tridimensionnels (2), comprenant au moins un dispositif de déballage (4) pour déballer un objet tridimensionnel (2) fabriqué de manière additive du matériau de construction (3) non consolidé qui l'entoure après l'achèvement d'un processus de construction additive, le poste de déballage (1) présentant une chambre de déballage (8), **caractérisé en ce que** le dispositif de déballage (4) est conçu comme un robot (7), en particulier un robot industriel, avec au moins trois axes de robot (A1- A6), au moins un outil de déballage (10), qui est conçu pour déballer un objet tridimensionnel (2) fabriqué de manière additive du matériau de construction (3) non consolidé qui l'entoure après l'achèvement d'un processus de construction additive, est disposé ou conçu sur un axe de robot (A6), ou le dispositif de déballage (4) comprend au moins un tel robot (7), le robot (7) étant disposé ou conçu de manière à être monté de manière mobile dans la chambre de déballage (8) dans au moins un degré de liberté de mouvement.

2. Station de déballage selon la revendication 1, **caractérisée en ce que** le déballage de l'objet produit de manière additive (2) du matériau de construction non consolidé (3) l'entourant comprend un retrait du matériau de construction (3) entourant l'objet (2).

3. Station de déballage selon la revendication 1 ou 2, **caractérisée en ce que** le dispositif de déballage (4) est disposé ou formé sur ou dans une paroi de fond, latérale ou de plafond délimitant la chambre de déballage (8).

4. Station de déballage selon l'une des revendications précédentes, **caractérisée en ce qu'**au moins certains des axes (A1 - A6), en particulier tous les axes (A1 - A6), du robot (7) peuvent être commandés indépendamment les uns des autres.

5. Station de déballage selon l'une quelconque des revendications précédentes, **caractérisée en ce que** l'outil de déballage (10) est un outil d'aspiration et/ou de soufflage faisant partie d'un dispositif d'aspiration et/ou de soufflage, notamment une lance d'aspiration ou une lance de soufflage.

6. Station de déballage selon la revendication 5, **caractérisé par** des éléments de conduite à travers lesquels un flux d'aspiration ou de soufflage peut s'écouler et qui sont disposés ou formés sur ou dans le robot (7), l'outil d'aspiration et/ou de soufflage étant relié par les éléments de conduite à une partie du dispositif d'aspiration et/ou de soufflage générant un flux d'aspiration ou de soufflage.

7. Station de déballage selon l'une des revendications précédentes, **caractérisée en ce que** l'outil de déballage (10) est agencé pour effectuer un processus de déballage combiné prévoyant un processus d'aspiration du matériau de construction au moyen d'un outil d'aspiration et un processus de soufflage du matériau de construction restant au moyen d'un outil de soufflage.

8. Station de déballage selon la revendication 7, **caractérisée en ce que** le processus d'aspiration et le processus de soufflage sont simultanément réalisables ou réalisés.

9. Station de déballage selon la revendication 7, **caractérisée en ce que** le processus d'aspiration et le processus de soufflage peuvent être réalisés ou sont réalisés simultanément avec un décalage temporel.

10. Station de déballage selon l'une des revendications précédentes, **caractérisé en ce que** l'outil de déballage (10) est disposé de manière amovible sur le robot (7), en particulier sur l'axe de robot respectif (A1 - A6), de sorte qu'il est disposé sur l'axe de robot respectif (A1 - A6) de manière remplaçable selon les besoins.

11. Station de déballage selon l'une des revendications précédentes, **caractérisée en ce que** le dispositif de déballage (4) comprend une pluralité de robots (7).

12. Station de déballage selon l'une des revendications précédentes, **caractérisée en ce que** le robot (7) comprend au moins un élément de préhension, dans laquelle une fixation amovible de l'outil de déballage (10) à l'axe de robot respectif (A1 - A6) ou à l'élément de robot (RG7) est réalisée par l'axe de robot respectif (A1 - A6) comprenant l'élément de préhension, qui est disposé pour saisir l'outil de déballage (10).

13. Station de déballage selon l'une des revendications précédentes, **caractérisée par** un dispositif de commande (11) qui est agencé pour générer des informations de commande commandant les mouvements des axes (A1 - A6) du robot pendant le fonctionnement du robot (7), le dispositif de commande (11) étant agencé pour, l'information de commande sur la base de données décrivant la forme géométrique-constructive d'un objet tridimensionnel (2) fabriqué de manière additive et devant être déballé, en particulier sur la base de données de construction décrivant la forme géométrique-constructive d'un objet tridimensionnel (2) fabriqué de manière additive et devant être déballé.

14. Station de déballage (1) selon l'une des revendications précédentes, **caractérisée par** une chambre de déballage (8), notamment parallélépipédique, le dispositif de déballage (4) étant disposé ou formé sur ou dans une paroi de sol, latérale ou de plafond délimitant la chambre de déballage (8).

15. Installation de fabrication additive d'objets tridimensionnels (2), **caractérisée en ce qu'**elle comprend au moins un poste de déballage (1) selon l'une des revendications précédentes.
